# EUROPÄISCHE PATENTSCHRIFT

(11) **EP 3 699 640 B1**
(45) Veröffentlichungstag und Bekanntmachung des Hinweises auf die Patenterteilung: **26.01.2022**
(21) Anmeldenummer: 19158077.8
(22) Anmeldetag: 19.02.2019
(51) Int. Cl.: G01S 17/89, G01S 7/481

(54) **OPTOELEKTRONISCHER SENSOR UND VERFAHREN ZUR ERFASSUNG EINES OBJEKTS**
OPTOELECTRONIC SENSOR AND METHOD FOR DETECTING AN OBJECT
CAPTEUR OPTOÉLECTRONIQUE ET PROCÉDÉ DE DÉTECTION D'UN OBJET

(43) Veröffentlichungstag der Anmeldung: 26.08.2020
(73) Patentinhaber: SICK AG, 79183 Waldkirch (DE)
(72) Erfinder: Buser, Roger, 79106 Freiburg (DE); Ostojic, Oliver, 79117 Freiburg (DE)

(56) Entgegenhaltungen:
- WO-A1-2020/132599
- DE-A1-102016 213 446
- US-A- 5 214 494
- US-A- 5 646 399

## Beschreibung

Die Erfindung betrifft einen optoelektronischen Sensor und ein Verfahren zur Erfassung eines Objekts in einem Überwachungsbereich nach dem Oberbegriff von Anspruch 1 beziehungsweise 15.

Viele optoelektronische Sensoren arbeiten nach dem Tastprinzip, bei dem ein Lichtstrahl in den Überwachungsbereich ausgesandt und der von Objekten zurückgeworfene Lichtstrahl wieder empfangen wird, um dann das Empfangssignal elektronisch auszuwerten. Dabei wird oft die Lichtlaufzeit mit einem bekannten Phasen- oder Pulsverfahren gemessen, um den Abstand eines angetasteten Objekts zu bestimmen. Diese Art der Abstandsmessung wird auch als ToF (Time of Flight) oder LIDAR (Light Detection and Ranging) bezeichnet.

Um den Messbereich zu erweitern, kann der Abtaststrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst. In den meisten Laserscannern wird die Abtastbewegung durch einen Drehspiegel erreicht. Es ist aber auch bekannt, stattdessen den gesamten Messkopf mit Lichtsendern und Lichtempfängern rotieren zu lassen, wie dies beispielsweise in DE 197 57 849 B4 beschrieben ist.

In den meisten Fällen und besonders bei der Entfernungsmessung muss der Sensor zwischen Nutzlicht und Umgebungslicht oder Störungen von anderen Lichtquellen unterscheiden können. Je nach Anwendung, etwa in besonders hellen Umgebungen, bei schlecht remittierenden Zielobjekten oder großen Messentfernungen, kann dies bei äußerst geringem Nutzlichtpegel eine sehr anspruchsvolle Aufgabe sein.

Eine bekannte Maßnahme zur Verbesserung der Robustheit gegen Fremdlicht ist die Verengung des Sichtfeldes mit einer Blende, die seitlich einfallendes Fremdlicht unterdrückt. Fremdlicht kann auch spektral unterdrückt werden. Dazu wird ein optisches Bandpassfilter verwendet, das auf die Wellenlänge des Sendelichts abgestimmt ist.

Eine Blendenöffnung lässt sich aber nicht beliebig klein wählen, weil die Empfangsoptik in der Praxis das Empfangslicht auf eine Lichtfleckgröße von bis zu 50 µm bündeln kann, aber nicht weiter. Mit allen Toleranzen und Temperatureffekten ist sogar eher eine Blendenöffnung von 200 µm realistisch, und noch größer bei Kunststoffoptiken oder nicht hochgenau justierten Optiken.

Sobald somit die Wirkung einer Blende ausgereizt ist, lässt sich das Signal-Rauschverhältnis noch durch genauere Abstimmung des Bandpassfilters weiter verbessern. Je schmalbandiger das Bandpassfilter ausgeführt werden kann, ohne dabei Nutzlicht zu dämpfen, umso größer wird der Vorteil.

Allerdings unterliegen die Wellenlänge des Nutzlichts und der Durchlassbereich des Bandpassfilters Toleranzen und Driften. So hängt die Wellenlänge des von einem Laser ausgesandten Sendelichts vom Typ des Lasers, dem konkret eingebauten Laser oder zumindest dessen Charge (production batch) und der Temperatur ab. Der Durchlassbereich des Bandpassfilters verändert sich mit dem Einfallswinkel. Das hat zwei Auswirkungen. Zum einen verschiebt sich der Durchlassbereich, wenn das Bandpassfilter ungenau ausgerichtet ist. Außerdem treffen nicht-parallele Strahlbündelanteile effektiv Filterwirkungen mit unterschiedlichem Durchlassbereich an.

Passt jedoch die Wellenlänge nicht zum Durchlassbereich, so blockiert das Bandpassfilter auch Nutzlicht. Aus diesem Grund wird der Durchlassbereich des Bandpassfilters mit einer Reserve und daher nicht beliebig schmal ausgelegt. Auch die Verbesserung des Signal-Rauschverhältnisses mit abgestimmtem optischen Bandpassfilter stößt folglich an Grenzen.

Ein optisches Bandpassfilter kann schon vor oder auf der großen Hauptlinse der Empfangsoptik angeordnet werden. Dort ist das einfallende Lichtbündel ausreichend kollimiert, so dass sich eine gute Filterwirkung ergibt. Allerdings zeigen sich bei Autokollimationsanordnung bauliche Probleme, zumindest müsste das optische Bandpassfilter eine Öffnung für das Sendelicht aufweisen, über die wieder Fremdlicht eindringt. Außerdem ist eine große Filterfläche mit entsprechend hohen Bauteilkosten erforderlich.

Bei Anordnung des optischen Bandpassfilters vor dem Lichtempfänger ergeben sich diese baulichen Schwierigkeiten nicht, und es genügt eine kleine Filterfläche. Das einfallende Strahlenbündel ist aber hinter der fokussierenden Hauptlinse überhaupt nicht mehr parallel, und deshalb muss das optische Bandpassfilter einen großen Einfallswinkelbereich abdecken und darf allein deshalb schon nur begrenzt schmalbandig sein.

Die DE 10 2014 116 852 A1 beschreibt einen optoelektronischen Sensor mit einem optischen Filterelement zwischen Empfangslinse und Lichtempfänger. Dabei wird der soeben beschriebene Effekt durch eine Krümmung des Filterelements ausgeglichen. Die Krümmung sorgt dafür, dass die zusammenlaufenden Lichtstrahlen trotz ihrer unterschiedlichen Einfallswinkel senkrecht auf das Filterelement auftreffen. Ein solches Filterelement ist jedoch vergleichsweise teuer. Außerdem werden die übrigen Effekte nicht behoben, die eine Abstimmung von Wellenlänge des Nutzlichts und Durchlassbereich erschweren, insbesondere eine Fehljustierung des Filterelements, bei welcher die einlaufenden Strahlen schräg statt senkrecht auftreffen.

Die US 4 106 855 zeigt ein optisches System mit einem Linsenelement, das eine sphärische Oberfläche mit integriertem schmalbandigem Bandpassfilter aufweist. Das Linsenelement selbst sowie die übrige Optikanordnung sind aber ausgesprochen zu komplex und beispielsweise in einem Laserscanner gar nicht einsetzbar.

Die US 4 184 749 offenbart eine Anordnung aus einem sphärischen Linsenelement und einem konzentrischen, bogenförmigen Linsenelement, das an seiner Außenseite ein ebenfalls konzentrisches, bogenförmiges, schmalbandiges Bandpassfilter aufweist. Aufgabe der Anordnung ist, Licht aus einem großen Sichtfeld zu empfangen und so zu zerstreuen, dass die Strahlen radial das konzentrische Linsenelement verlassen, somit das bogenförmige Bandpassfilter senkrecht durchdringen. Um das Linsenelement mit dem Bandpassfilter zu realisieren, muss mit hohem Aufwand eine makroskopische gekrümmte Scheibe beschichtet werden, was sich für wettbewerbsfähige Herstellkosten verbietet. Die Anordnung ist auch nur für eine große Bildebene und damit einen großen Lichtempfänger gedacht. Für einen üblichen Lichtempfänger oder Pixel eines optoelektronischen Sensors ist die Anordnung nicht ausgelegt und wäre dafür ungeeignet.

In der US 2017/0289524 A1 wird ein optisches System zum Erfassen von Abstandsinformationen beschrieben. Eine gemeinsame Empfangslinse fokussiert das Licht auf eine Vielzahl mechanischer Blenden, hinter denen jeweils eine kleine Sammellinse sitzt, die das Licht kollimiert, das dann durch ein optisches Bandpassfilter auf jeweilige Pixel eines Lichtempfängers trifft. Die kleinen Sammellinsen reduzieren zwar den Einfallswinkel auf das optische Bandpassfilter. Sie müssen aber wegen des kurzen Abstands zum Pixel ein relativ großes Bildfeld haben. Das führt zwangsläufig dazu, dass das Bild unscharf wird.

Die DE 10 2015 213 446 A1 offenbart ein optisches System zur Erfassung eines Abtastfelds mit einem optischen Filterelement im Empfangspfad. Der Strahlenverlauf des Sendelichts wird mit einer Ablenkeinheit abgelenkt, und die Wellenlänge ist abhängig von der Ablenkung variierbar. In einer Ausführungsform steht das Filterelement derart schräg, dass der Empfangsstrahl größter Wellenlänge genau senkrecht zur Filteroberfläche einfällt.

Aus der US 5 214 494 ist ein Lichtsensor mit anpassbarer spektraler Charakteristik bekannt. Die Anpassung erfolgt dadurch, dass ein Interferenzfilter in einer Mehrfachanordnung optischer Filter verkippt wird.

In der US 5 646 399 wird ein anpassbares optisches Filter beschrieben. Dabei wird das einfallende Licht in eine Haupt- und zwei Nebenkomponenten aufgespaltet, damit die Nebenkomponenten in verschiedenen Winkeln auftreffen. Aus dem Verhältnis der Pegel der Nebenkomponenten wird gesteuert, wie das Filter verkippt werden muss, um die Hauptkomponente in ihrem Wellenlängenbereich passieren zu lassen.

Es ist daher Aufgabe der Erfindung, die Fremdlichtunterdrückung eines gattungsgemäßen optoelektronischen Sensors weiter zu verbessern.

Diese Aufgabe wird durch einen optoelektronischen Sensor, insbesondere Lichttaster, und ein Verfahren zur Erfassung eines Objekts in einem Überwachungsbereich nach Anspruch 1 beziehungsweise 15 gelöst. Ein Lichtsender erzeugt Sendelicht in einem bestimmten, vorzugsweise schmalen Wellenlängenbereich. Das Sendelicht wird als remittiertes Sendelicht wieder empfangen, nachdem es zumindest teilweise im Überwachungsbereich von einem Objekt zurückgeworfen wurde. Das entsprechende Empfangssignal eines Lichtempfängers wird ausgewertet, um eine optisch erfassbare Information über das Objekt zu gewinnen, wie eine binäre Anwesenheitsinformation, einen Abstand, eine Position oder auch eine Farbe. Im Empfangspfad des remittierten Sendelichts vor dem Lichtempfänger ist eine Empfangsoptik angeordnet, die ein auf den Wellenlängenbereich des Lichtsenders abgestimmtes optisches Filter aufweist, um möglichst nur das remittierte Sendelicht passieren zu lassen und Fremdlicht außerhalb von dessen Spektrum auszublenden.

Die Erfindung geht von dem Grundgedanken aus, eine Anpassung des optischen Filters vorzunehmen. Dazu sorgt eine Verstelleinrichtung dafür, dass sich der Einfallswinkel des remittierten Sendelichts auf das Filter verändert. Auf diese Weise kann ein Durchlassbereich des optischen Filters an den Wellenlängenbereich des Sendelichts angepasst werden. Die Anpassung findet beispielsweise als letzter Justageschritt etwa im Rahmen der Fertigung statt. Dazu kann mittels der Verstelleinrichtung der Einfallswinkel vorzugsweise unter sonst unveränderten Fremdlichtbedingungen so lange verstellt werden, bis ein maximaler Empfangssignalpegel erreicht ist. Mittels der Verstelleinrichtung werden so Toleranzen im Wellenlängenbereich, verbleibende Justagefehler im Empfangspfad und/oder Driften ausgeglichen.

Die Erfindung hat den Vorteil, dass Fremdlicht effizient unterdrückt wird. Durch die Anpassbarkeit mit Hilfe der Verstelleinrichtung sind keine oder jedenfalls weniger Reserven im Durchlassbereich erforderlich, so dass ein besonders gutes Signal-Rauschverhältnis erzielt wird. Da auf Toleranzen des Wellenlängenbereichs des Lichtsenders reagiert werden kann, bestehen keine Abhängigkeiten auf bestimmte Lichtquellen, Chargen oder Hersteller. Das optische Filter kann bei alledem sehr klein und kostengünstig ausgeführt sein.

Die Verstelleinrichtung ist bevorzugt dafür ausgebildet, das optische Filter zu verkippen. Durch das Schrägstellen des Filters gegenüber den einlaufenden Lichtstrahlen verschiebt sich der Durchlassbereich. Es genügt eine sehr kostengünstige Verstellmöglichkeit für die Fertigung. Prinzipiell ist aber auch eine elektronische Aktorik beispielsweise mit automatischer Regelung im Betrieb, bei Wartungen oder bei der Inbetriebnahme vor Ort denkbar.

Das optische Filter ist bevorzugt ein Bandpassfilter. Der Durchlassbereich lässt sich demnach durch eine untere und obere Grenze oder alternativ eine Mittenfrequenz angeben, um die der Durchlassbereich meist in etwa symmetrisch liegt. Ein Bandpassfilter ist besonders geeignet, Fremdlicht zu unterdrücken, indem es Licht sowohl zu kleiner als auch zu großer Wellenlängen ausschließt.

Der Wellenlängenbereich kann sich aufgrund von Driften im Betrieb des Sensors und/oder Eigenschaften des Lichtsenders in einem Toleranzwellenlängenbereich verschieben, und bevorzugt weist das optische Filter einen Durchlassbereich auf, der schmaler ist als der Toleranzwellenlängenbereich. Driften bezeichnen zeitabhängige Effekte etwa durch Alterung und besonders Temperatur. Der Sensor ist für bestimmte Umgebungsbedingungen ausgelegt, wie einen spezifizierten Temperaturbereich. Deshalb lässt sich angeben, wie groß der Einfluss von Driften werden kann. Außerdem ist denkbar, dass der Lichtsender von seinem spezifizierten Wellenlängenbereich abweicht. So ergibt sich ein Toleranzwellenlängenbereich, und herkömmlich würde das optische Filter mit einer Reserve seines Durchlassbereichs ausgelegt, um den Toleranzwellenlängenbereich abzudecken. Nach dieser Ausführungsform wird aber der Durchlassbereich schmaler gewählt, insbesondere so, dass nur Driften und keine Verschiebung durch Bauteiltoleranzen berücksichtigt wird. Die Verstelleinrichtung sorgt dafür, dass auch der besonders schmale Durchlassbereich zu dem tatsächlichen Wellenlängenbereich passt.

Das optische Filter weist bevorzugt einen Durchlassbereich mit einer Halbwertsbreite von höchstens 40 nm, höchstens 30 nm, höchstens 20 nm oder höchstens 10 nm. Das sind einige Werte für einen nach herkömmlichem Maßstab mit Reserve für Toleranzen zu schmalen Durchlassbereich. Typische Werte für die Verschiebung der Mittenfrequenz des Lichtsenders aufgrund von Fertigungstoleranzen sind ±10 nm oder bestenfalls ±5 nm. Damit bleibt für den Ausgleich von Driften bei den genannten Werten kaum noch ein Puffer. Das ist aber erfindungsgemäß auch gar nicht nötig, weil zumindest die Fertigungstoleranzen durch die Verstelleinrichtung kompensiert sind.

Das optische Filter ist bevorzugt plan ausgebildet. Es weist also keine Krümmungen auf und ist daher kostengünstig.

Das optische Filter weist eine Fläche von höchstens 25 mm², höchstens 20 mm², höchstens 15 mm², höchstens 10 mm² oder höchstens 5 mm² auf. Vorzugsweise ist es zumindest in etwa quadratisch, so dass die Grenzen in etwa 5x5 mm², 4x4 mm², 3x3 mm² oder 2×2 mm² entsprechen. Ein derartiges optisches Filter ist ebenfalls kostengünstig und wäre viel zu klein, um es vor oder auf der Hauptlinse zu platzieren.

Der Wellenlängenbereich des Lichtsenders verschiebt sich vorzugsweise mit der Temperatur um höchstens 0,1 nm/K, höchstens 0,8 nm/K, höchstens 0,6 nm/K oder höchstens 0,05 nm/K. Das begrenzt die Drift über Temperatur, so dass auch ein schmalerer Durchlassbereich noch ausreicht, um den durch Driften verschobenen Wellenlängenbereich noch abzudecken. Eine Möglichkeit ist, im Lichtsender ein VCSEL einzusetzen, das diese Werte erreichen kann. Alternativ weist der Lichtsender eine Temperaturstabilisierung auf. Die Temperaturanpassung erfolgt beispielsweise mit einem Peltierelement oder durch eine Anpassung des Laserstroms.

Die Empfangsoptik weist bevorzugt ein erstes fokussierendes optisches Element auf. Damit wird das remittierte Sendelicht fokussiert. Häufig wird eine vergleichsweise große Haupt- oder Empfangslinse eingesetzt, möglicherweise auch ein Objektiv mit mehreren Linsen oder eine reflexive Anordnung.

Dem ersten fokussierenden optischen Element ist bevorzugt eine Blende nachgeordnet, nochmals bevorzugt in der Brennebene des ersten fokussierenden optischen Elements. Das sorgt für eine geometrische Unterdrückung von Fremdlicht ergänzend zu der spektralen Unterdrückung des optischen Filters, da seitliches Fremdlicht nicht zum Lichtempfänger gelangt.

Die Empfangsoptik weist bevorzugt ein zweites fokussierendes optisches Element auf, insbesondere eine kugelförmige Sammellinse. Das zweite fokussierende optische Element begrenzt den Einfallswinkel auf das optische Filter, richtet also die nach der Fokussierung durch die Hauptlinse zusammenlaufenden einfallenden Strahlen zueinander aus, so dass sie eher parallel zueinander verlaufen. Eine kugelförmige Sammellinse als zweites fokussierendes optisches Element erleichtert durch ihre beliebige Rotationssymmetrie die Justierung und Handhabung. Die Herstellung der Glaskugel ist sehr präzise bei niedrigen Kosten.

Die Verstelleinrichtung ist bevorzugt dafür ausgebildet, das optische Filter und das zweite fokussierende optische Element zu verkippen, insbesondere mit Drehpunkt in dem zweiten fokussierenden optischen Element. In dieser Ausführungsform wird das optische Filter nicht allein verkippt, sondern in einer kompakten Baugruppe aus dem zweiten fokussierenden optischen Element und, soweit vorhanden, der Blende. Der Drehpunkt für das Verkippen liegt vorzugsweise in dem zweiten fokussierenden optischen Element und besonders bevorzugt dessen Mittelpunkt bei Kugelform. Dann ändert die Drehung die optische Wirkung des zweiten fokussierenden optischen Elements wegen dessen Symmetrieeigenschaften nicht.

Die Empfangsoptik weist bevorzugt in dieser Reihenfolge ein erstes fokussierendes optisches Element, eine Blende, ein zweites fokussierendes optisches Element und das optische Filter auf. Diese Reihenfolge ist aus Sicht des einfallenden remittierten Sendelichts angegeben, das demnach zuerst auf die Hauptlinse und nach dem optischen Filter auf den Lichtempfänger trifft. Mit diesen optischen Elementen wird zugleich eine einfache Justage und Anpassung an den Wellenlängenbereich des Nutzlichts, ein kleiner Querschnitt des Lichtflecks und eine geringe Spreizung der Einfallswinkel auf das optische Filter beziehungsweise ein dort nur wenig divergentes Lichtbündel erreicht.

Die Steuer- und Auswertungseinheit ist bevorzugt dafür ausgebildet, aus einer Lichtlaufzeit zwischen Aussenden des Sendelichts und Empfangen des remittierten Sendelichts einen Abstand des Objekts zu bestimmen. Damit entsteht ein entfernungsmessender Sensor, und es wird als Messinformation über das Objekt dessen Abstand bestimmt. Gerade bei hohen Reichweiten, viel Umgebungslicht und/oder schlecht remittierenden, dunklen Objekten ist der Nutzlichtanteil häufig sehr gering, so dass ein Lichtlaufzeitverfahren stark von der verbesserten Fremdlichtunterdrückung profitiert.

Der Sensor ist bevorzugt als Laserscanner ausgebildet und weist dafür eine bewegliche Ablenkeinheit zur periodischen Ablenkung des Sendelichts in dem Überwachungsbereich auf. So wird der Überwachungsbereich gegenüber einem eindimensionalen Sensor erheblich vergrößert, nämlich auf eine Abtastebene mit Winkelbereich von bis zu 360° und bei zusätzlicher Ablenkung in Elevation und/oder Verwendung mehrere in Elevation versetzten Abtaststrahlen sogar auf einen dreidimensionalen Raumbereich. Der Laserscanner nutzt vorzugsweise ein Lichtlaufzeitverfahren zur Abstandsmessung und erzeugt damit, unter Berücksichtigung der jeweiligen Winkel, unter denen das Sendelicht ausgesandt wird, 3D-Messpunkte innerhalb der Abtastebene oder sogar im Raum.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines optoelektronischen Sensors;
- Fig. 2: eine Darstellung des Strahlengangs im Empfangspfad mit optischem Filter eines optoelektronischen Sensors;
- Fig. 3: beispielhafte Verläufe der Mittenwellenlänge eines optischen Filters in Abhängigkeit vom Einfallswinkel für zwei verschiedene Brechungsindices;
- Fig. 4: eine Darstellung ähnlich Figur 2 nun bei verkipptem optischem Filter zur Anpassung des Einfallswinkels beziehungsweise des Durchlassbereichs; und
- Fig. 5: eine schematische Darstellung eines Laserscanners.

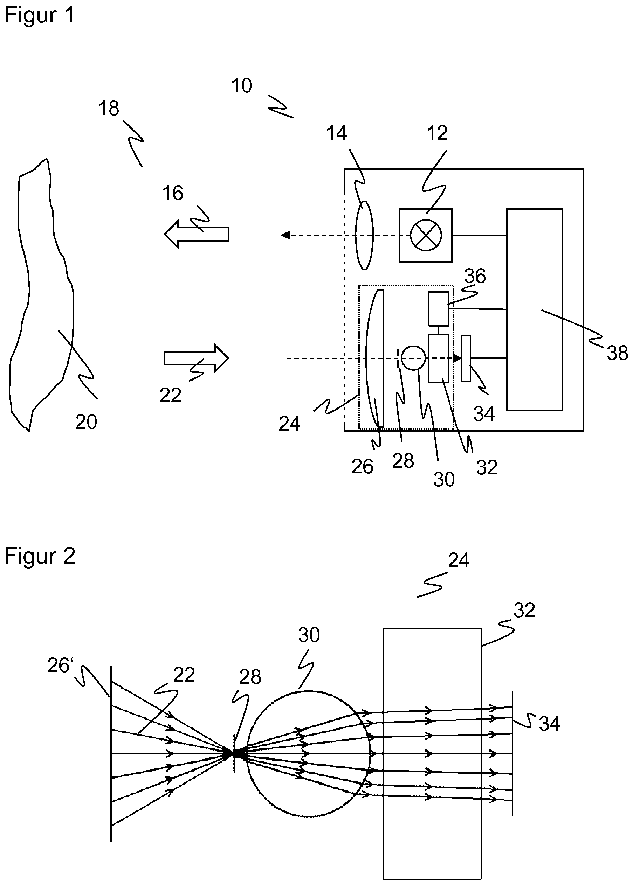

Figur 1 zeigt eine schematische Schnittdarstellung eines optoelektronischen Sensors 10. Ein Lichtsender 12, beispielsweise ein Laser oder eine LED, sendet über eine Sendeoptik 14 Sendelicht 16 in einen Überwachungsbereich 18. Der Lichtsender 12 weist vorzugsweise eine Laserlichtquelle auf, insbesondere einen Halbleiterlaser in Form eines VCSEL-Lasers oder Kantenemitters, aber auch einen anderen Laser wie einen Faserlaser. Damit ist ein sehr eng begrenzter Wellenlängenbereich des Sendelichts 16 möglich. Die verwendeten Lichtwellenlängen liegen typischerweise zwischen 200 nm und 2000 nm, insbesondere bei 660 nm, 850 nm, 900 nm und 1550 nm.

Trifft das Sendelicht 16 in dem Überwachungsbereich 18 auf ein Objekt 20, so kehrt ein Teil des Lichts als remittiertes Sendelicht 22 zu dem Sensor 10 zurück und wird dort von einer Empfangsoptik 24 mit einer ersten Empfangslinse 26, einer Blende 28, einer zweiten vorzugsweise kugelförmigen Linse 30 und einem optischen Filter 32 auf einen Lichtempfänger 34 geführt. Das optische Filter 32 kann mit Hilfe einer Verstelleinrichtung 36 in unterschiedliche Kippstellungen gebracht werden. Aufbau und Funktion der Empfangsoptik 24 werden später unter Bezugnahme auf die Figuren 2 bis 4 genauer erläutert. Der Lichtempfänger 34 ist beispielsweise eine PIN-Diode, eine APD (Avalanche Photo Diode, Lawinenphotodiode) oder eine Einzelphotonen-APD (SPAD, Single-Photon APD, Lawinenphotodiode im Geiger-Modus) beziehungsweise eine Mehrfachanordnung davon.

Eine Steuer- und Auswertungseinheit 38 steuert den Lichtsender 12 und wertet das Empfangssignal des Lichtempfängers 34 aus, um optisch erfassbare Informationen des Objekts 20 zu gewinnen, beispielsweise eine binäre Anwesenheitsfeststellung, eine Objektposition oder eine Farbe. Vorzugsweise bestimmt die Steuer- und Auswertungseinheit 38 einen Abstand des Objekts 20 mittels Triangulation oder eines Lichtlaufzeitverfahrens. Ein dabei eingesetztes Lichtlaufzeitverfahren kann ein Einzelpuls- oder Mehrpulsverfahren, aber auch ein Phasenverfahren sein und ist an sich bekannt.

Der Grundaufbau des Sensors 10 gemäß Figur 1 ist nur beispielhaft zu verstehen. Es sind andere Anordnungen denkbar, beispielsweise ein koaxialer anstelle eines biaxialen Aufbaus, und auch andere Sensorarten als ein eindimensionaler Lichttaster, insbesondere ein Laserscanner.

Figur 2 zeigt nochmals den Empfangspfad vor dem Lichtempfänger 34 sowie den Strahlengang des remittierten Sendelichts 22 in einer vergrößerten Darstellung. Zur Größenvorstellung kann die kugelförmige zweite Linse 30 beispielsweise einen Durchmesser von ungefähr 1 mm aufweisen. Anstelle der ersten Empfangslinse 26 ist eine Ebene 26' hinter der ersten Empfangslinse 26 gezeigt, denn die Abmessungen der ersten Empfangslinse 26 oder Hauptlinse betragen ein Vielfaches der zweiten Linse 30 durchaus im Zentimeterbereich und würden den Abbildungsmaßstab sprengen.

Die Strahlen des remittierten Sendelichts 22 sind anfangs, links in Figur 2, durch die Fokussierung der ersten Empfangslinse 26 stark zusammenlaufend mit unterschiedlichen Einfallswinkeln im Bereich von beispielsweise ±30°. Das remittierte Sendelicht 22 wird von der ersten Empfangslinse 26 auf die Blende 28 mit einer Blendenöffnung von hier beispielhaft 300 µm fokussiert. Durch die Blendenwirkung wird seitliches Fremdlicht unterdrückt, das rein geometrisch nicht von dem Lichtsender 12 stammen kann.

Die kugelförmige zweite Linse 30 richtet die Strahlen dann wieder weitgehend parallel zueinander aus, so dass sie mit gleichem Einfallswinkel oder jedenfalls in einem kleinen Einfallswinkelbereich von beispielsweise ±3° auf das optische Filter 32 fallen. Die zweite Linse 30 ist beispielsweise als Glaskugel ausgebildet. Durch deren vollständige Rotationssymmetrie ist die zweite Linse 30 sehr einfach zu handhaben und benötigt keine besondere Orientierung beim Einsetzen in ihre Halterung während der Fertigung.

Aufgrund seiner Positionierung im bereits fokussierten Strahlengang des remittierten Sendelichts 22 kann das optische Filter 32 mit kleiner Fläche in der Größenordnung des Lichtempfänger 34 ausgeführt sein. In Figur 2 ist beispielhaft eine Fläche von beispielsweise 3×3 mm² des optischen Filters 32 und von 1×1 mm² des Lichtempfängers 34 vorgesehen. Da die auf das optische Filter 32 einfallenden Lichtstrahlen einen weitgehend gleichen Einfallswinkel haben, kann das optische Filter 32 überdies flach sein.

Herkömmlich weist der Durchlassbereich eines Spektralfilters typischerweise eine Halbwertsbreite von 80 nm auf. Grund für den relativ großen Durchlassbereich ist, dass Reserven für Driften und Verschiebungen des Wellenlängenbereichs des remittierten Sendelichts 22 vorgehalten werden. Driften bezeichnen Veränderungen des Wellenlängenbereichs über die Zeit durch Effekte wie Bauteilalterung und vor allem eine Temperaturabhängigkeit. Das lässt sich durch entsprechend stabile Lasertypen als Lichtsender 12 noch einigermaßen in den Griff bekommen. Beispielsweise zeigt ein VCSEL nur einen Bruchteil der Temperaturabhängigkeit eines herkömmlichen Kantenemitters, als Zahlenbeispiel nur etwa ein Fünftel bei 0,06 nm/K. Das ergibt dann bei einem Arbeitsbereich des Sensors 10 von 70 K eine Drift von ungefähr 4 nm. Es ist auch denkbar, einen temperaturstabilisierten Lichtsender 12 einzusetzen. Für Temperaturdrift allein sind also die herkömmlichen Reserven im Durchlassbereich des optischen Filters 32 nicht erforderlich.

Es gibt jedoch zusätzlich auch Verschiebungen des Wellenlängenbereichs. Dazu trägt eine Toleranz der zentralen Wellenlänge des Lichtsenders 12 von 10-20 nm bei, die ihre Ursache in unterschiedlichen Chargen und damit Wafern und erst recht dem Wechsel auf eine Lichtquelle eines anderen Herstellers und damit einem anderen Herstellungsprozess hat.

Außerdem ist der Durchlassbereich des optischen Filters 32 vom Einfallswinkel des remittierten Sendelichts 22 abhängig. Ist also die Empfangsoptik 24 nicht so exakt justiert wie in Figur 2, dass ein senkrechtes Auftreffen gewährleistet ist, so gibt es zusätzliche Verschiebungseffekte.

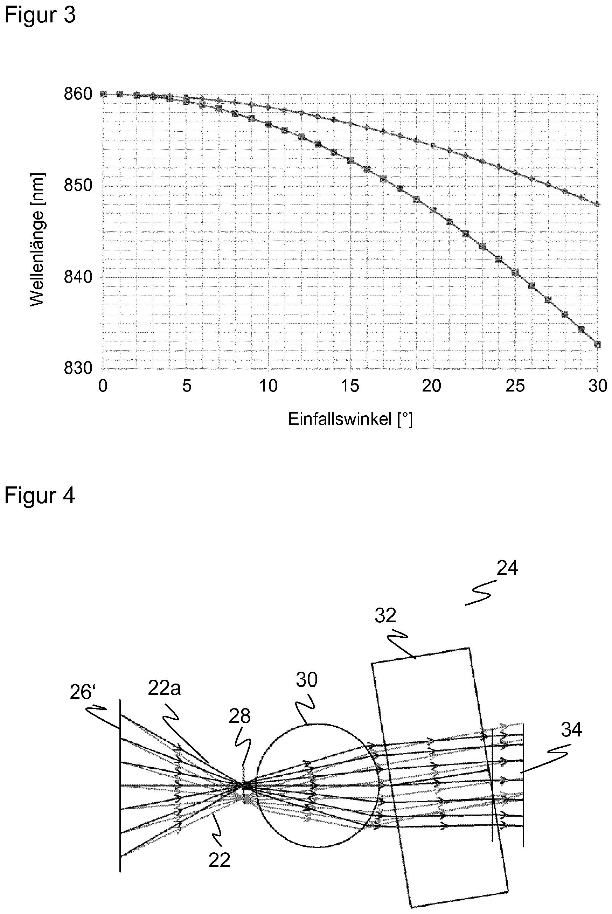

Die spektrale Verschiebung in Abhängigkeit vom Einfallswinkel ist in Figur 3 illustriert. Darin ist für zwei effektive Brechungsindices n=2 (untere Linie) und n=3 (obere Linie) die Mittenfrequenz eines optischen Bandpassfilters gegen den Einfallswinkel aufgetragen.

Erfindungsgemäß wird dies nun ausgenutzt, um den Durchlassbereich des optischen Filters 32 an den Wellenlängenbereich des remittierten Sendelichts 22 anzupassen. Das optische Filter 32 wird dazu mit Hilfe der Verstelleinrichtung 36 verkippt. Dabei kann die Verstelleinrichtung 36 aus einfachsten mechanischen Mitteln bestehen, die nur eine Anpassung im Rahmen der Fertigung mit entsprechenden Werkzeugen und Sorgfalt ermöglichen. Umgekehrt ist auch eine elektronische Aktorik vorstellbar. Es kommt hier nicht auf die Mittel an, sondern auf das Ergebnis des passend verkippten optischen Filters 32, gegebenenfalls auch einfach durch Verkleben oder sonstiges Befestigen in der gewünschten Orientierung. Es ist denkbar, das optische Filter 32 schon in einer Grundstellung zu verkippen. Wie Figur 3 zeigt, ergibt sich ein größerer Effekt je Grad weiter rechts in der Darstellung. Wird also beispielsweise eine Grundstellung bei einem Einfallswinkel von 17° gewählt, so ist mit ±5° Verstellwinkel ein Spektralbereich von ±5 nm abgedeckt.

Figur 4 zeigt ähnlich Figur 2 den Empfangspfad des remittierten Sendelichts 22, nun aber mit verkipptem optischem Filter 32, in diesem Beispiel um etwa 9°. Das ergibt einen senkrechten Einfallswinkel für die heller dargestellten Strahlen des remittierten Sendelichts 22a. Zum Vergleich sind auch dunkel dargestellte zentral durch die Blende 28 verlaufende Strahlen eingezeichnet. Das sind nur zwei Beispiele der Auswirkungen von Dejustierung und Verkippung. Der tatsächlich gewünschte Kippwinkel ist derjenige, bei dem der Durchlassbereich des optischen Filters möglichst gut auf den Wellenlängenbereich des einfallenden remittierten Sendelichts 22 abgestimmt ist. Das muss keineswegs senkrechtem Einfall entsprechen, vielmehr ist der Kippwinkel, wie aus Figur 3 zu erkennen, gerade der Einstellparameter. Praktisch ist die Optimierung dadurch möglich, dass bei aktiviertem Lichtsender 12 und Dunkelheit oder möglichst konstanten Fremdlichtbedingungen das optische Filter 32 so lange verkippt wird, bis der Empfangspegel des Lichtempfängers 34 maximal ist. Im Zusammenhang mit Figur 3 wurde schon darauf verwiesen, dass so eine Verschiebung und Anpassung des Durchlassbereichs des optischen Filters 32 von ±5 nm oder auch ±10 nm möglich ist.

Insgesamt ist es daher möglich, ein optisches Filter 32 und insbesondere Bandpassfilter mit einer Halbwertsbreite von nur 20 nm oder sogar nur 10 nm zu verwenden und dennoch weiterhin das gesamte Nutzlicht auch unter verbleibenden Driften passieren zu lassen. Dadurch wird das Fremdlicht gegenüber einer herkömmlichen Halbwertsbreite von 80 nm um einen Faktor vier oder sogar acht verringert. Da bei richtig eingestelltem Kippwinkel des optischen Filters 32 weiterhin alles Nutzlicht durchgelassen wird, verbessert sich das Signal-Rausch-Verhältnis entsprechend.

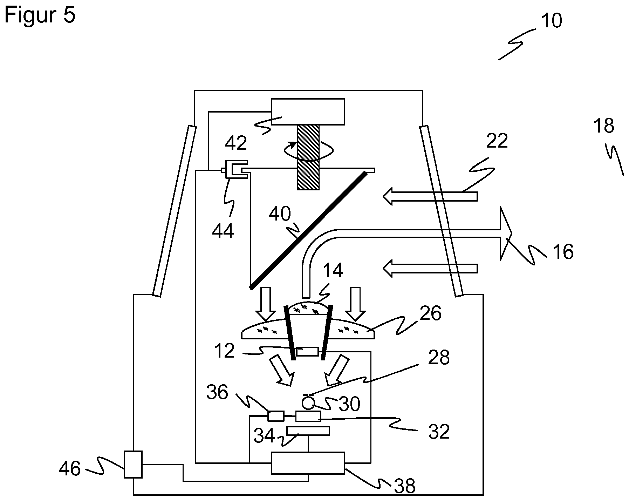

Figur 5 zeigt schematische Schnittdarstellung durch eine Ausführungsform des optoelektronischen Sensors 10 als Laserscanner. Dabei sind schon aus Figur 1 bekannte Merkmale mit denselben Bezugszeichen versehen und werden nicht erneut beschrieben. Im Unterschied zu Figur 1 verläuft der Strahlengang von Sendelicht 16 und remittiertem Sendelicht 22 über eine Ablenkeinheit 40.

Die Ablenkeinheit 40 wird von einem Motor 42 in eine kontinuierliche Drehbewegung mit einer Scanfrequenz versetzt. Dadurch tastet das Sendelicht 16 während jeder Scanperiode, also einer vollständigen Umdrehung bei der Scanfrequenz, eine Ebene ab. Am Außenumfang der Ablenkeinheit 40 ist eine Winkelmesseinheit 44 angeordnet, um die jeweilige Winkelstellung der Ablenkeinheit 40 zu erfassen. Die Winkelmesseinheit 44 wird hier beispielhaft von einer Strichscheibe als Winkelmaßverkörperung und einer Gabellichtschranke als Abtastung gebildet.

Die Steuer- und Auswertungseinheit 38 ist außer mit dem Lichtsender 12 und dem Lichtempfänger 34 auch mit dem Motor 42 und der Winkelmesseinheit 44 verbunden. Sie bestimmt mit einem an sich bekannten Lichtlaufzeitverfahren den Abstand zu dem jeweils angetasteten Objekt. Zusammen mit dem jeweiligen von der Winkelmesseinheit 44 bereitgestellten Winkel werden daher Messpunkte oder Konturen in Polarkoordinaten erfasst. An einem Ausgang 46 werden diese Messpunkte als Rohdaten oder daraus intern in der Steuer- und Auswertungseinheit 38 bestimmte Messergebnisse ausgegeben.

Bei dem dargestellten Laserscanner befindet sich der Lichtsender 12 und dessen Sendeoptik 14 in einer zentralen Öffnung der Empfangsoptik 24. Dadurch entsteht eine koaxiale Anordnung. Das lässt sich alternativ auch mit einem eigenen Spiegelbereich für das Sendelicht 16 oder mit Teilerspiegel erreichen. Wie schon zu Figur 1 gesagt, kann auch der dort gezeigte Sensor 10 alternativ einen koaxialen Aufbau haben, ebenso wie umgekehrt ein biaxialer Laserscanner möglich ist. Weitere alternative Bauformen eines Laserscanners verwenden keinen Drehspiegel als Ablenkeinheit 40, sondern lassen den gesamten Messkopf mit Lichtsender 12 und Lichtempfänger 34 rotieren.

## Patentansprüche

1. Optoelektronischer Sensor (10) zur Erfassung eines Objekts (20) in einem Überwachungsbereich (18) mit einem Lichtsender (12) zum Aussenden von Sendelicht (16) eines Wellenlängenbereichs, mit einem Lichtempfänger (34) zum Erzeugen eines Empfangssignals aus dem an dem Objekt (20) remittierten Sendelicht (22), mit einer dem Lichtempfänger (34) vorgeordneten Empfangsoptik (24), die ein auf den Wellenlängenbereich abgestimmtes optisches Filter (32) zur Unterdrückung von Fremdlicht aufweist, sowie mit einer Steuer- und Auswertungseinheit (38), die dafür ausgebildet ist, aus dem Empfangssignal eine Objektinformation zu erzeugen,
**gekennzeichnet durch**
eine Verstelleinrichtung (36) zum Verändern des Einfallswinkels des remittierten Sendelichts (22) auf das optische Filter (32), um einen Durchlassbereich des optischen Filters (32) an den Wellenlängenbereich anzupassen.

2. Sensor (10) nach Anspruch 1,
wobei die Verstelleinrichtung (36) dafür ausgebildet ist, das optische Filter (32) zu verkippen.

3. Sensor (10) nach Anspruch 1 oder 2,
wobei das optische Filter (32) ein Bandpassfilter ist.

4. Sensor (10) nach einem der vorhergehenden Ansprüche,
wobei sich der Wellenlängenbereich aufgrund von Driften im Betrieb des Sensors (10) und/oder Eigenschaften des Lichtsenders (12) in einem Toleranzwellenlängenbereich verschiebt, und wobei das optische Filter (32) einen Durchlassbereich aufweist, der schmaler ist, als der Toleranzwellenlängenbereich.

5. Sensor (10) nach einem der vorhergehenden Ansprüche,
wobei das optische Filter (32) einen Durchlassbereich mit einer Halbwertsbreite von höchstens 20 nm oder höchstens 10 nm aufweist.

6. Sensor (10) nach einem der vorhergehenden Ansprüche,
wobei das optische Filter (32) plan ausgebildet ist.

7. Sensor (10) nach einem der vorhergehenden Ansprüche,
wobei das optische Filter (32) eine Fläche von höchstens 20 mm² oder höchstens 10 mm² aufweist.

8. Sensor (10) nach einem der vorhergehenden Ansprüche,
wobei der Wellenlängenbereich des Lichtsenders (12) sich mit der Temperatur um höchstens 0,1 nm/K oder höchstens 0,05 nm/K verschiebt.

9. Sensor (10) nach einem der vorhergehenden Ansprüche,
wobei die Empfangsoptik (24) ein erstes fokussierendes optisches Element (26) aufweist, insbesondere mit nachgeordneter Blende (28).

10. Sensor (10) nach einem der vorhergehenden Ansprüche,
wobei die Empfangsoptik (24) ein zweites fokussierendes optisches Element (30) aufweist, insbesondere eine kugelförmige Sammellinse.

11. Sensor (10) nach Anspruch 10,
wobei die Verstelleinrichtung (36) dafür ausgebildet ist, das optische Filter (32) und das zweite fokussierende optische Element (30) zu verkippen, insbesondere mit Drehpunkt in dem zweiten fokussierenden optischen Element (30).

12. Sensor (10) nach Anspruch 9 und 10 oder 11,,
wobei die Empfangsoptik (24) in dieser Reihenfolge das erste fokussierende optische Element (26), die Blende (28), das zweite fokussierende optische Element (30) und das optische Filter (32) aufweist.

13. Sensor (10) nach einem der vorhergehenden Ansprüche,
wobei die Steuer- und Auswertungseinheit (38) dafür ausgebildet ist, aus einer Lichtlaufzeit zwischen Aussenden des Sendelichts (16) und Empfangen des remittierten Sendelichts (22) einen Abstand des Objekts (20) zu bestimmen.

14. Sensor (10) nach einem der vorhergehenden Ansprüche,
der als Laserscanner ausgebildet ist und dafür eine bewegliche Ablenkeinheit (40) zur periodischen Ablenkung des Sendelichts (16) in dem Überwachungsbereich (18) aufweist.

15. Verfahren zur Erfassung eines Objekts (20) in einem Überwachungsbereich (18), bei dem Sendelicht (16) in einem Wellenlängenbereich ausgesandt, nach Remission an dem Objekt (20) als remittiertes Sendelicht (22) durch eine Empfangsoptik (24) wieder empfangen und in ein Empfangssignal gewandelt wird, um aus dem Empfangssignal eine Objektinformation zu erzeugen, wobei die Empfangsoptik (24) mit einem auf den Wellenlängenbereich abgestimmten optischen Filter (32) Fremdlicht unterdrückt,
**dadurch gekennzeichnet,**
**dass** der Einfallswinkel des remittierten Sendelichts (22) auf das optische Filter (32) eingestellt wird, um einen Durchlassbereich des optischen Filters (32) an den Wellenlängenbereich anzupassen.

## Claims

1. An optoelectronic sensor (10) for detecting an object (20) in a monitoring area (18), the sensor (10) having a light transmitter (12) for transmitting transmitted light (16) of a wavelength range, a light receiver (34) for generating a received signal from the remitted transmitted light (22) remitted at the object (20), receiving optics (24) arranged in front of the light receiver (34) and comprising an optical filter (32) matched to the wavelength range for suppressing extraneous light, and a control and evaluation unit (38) configured to generate object information from the received signal,
**characterized in that** the sensor (10) comprises an adjusting device (36) for changing the angle of incidence of the remitted transmitted light (22) on the optical filter (32) in order to adapt a passband of the optical filter (32) to the wavelength range.

2. The sensor (10) according to claim 1,
wherein the adjusting means (36) is configured to tilt the optical filter (32).

3. The sensor (10) according to claim 1 or 2,
wherein the optical filter (32) is a bandpass filter.

4. The sensor (10) according to any of the preceding claims,
wherein the wavelength range shifts in a tolerance wavelength range due to drifts in the operation of the sensor (10) and/or characteristics of the light transmitter (12), and wherein the optical filter (32) has a passband narrower than the tolerance wavelength range.

5. The sensor (10) according to any of the preceding claims,
wherein the optical filter (32) has a passband with a half-width of at most 20 nm or at most 10 nm.

6. The sensor (10) according to any of the preceding claims,
wherein the optical filter (32) is planar.

7. The sensor (10) according to any of the preceding claims,
wherein the optical filter (32) has an area of at most 20 mm² or at most 10 mm².

8. The sensor (10) according to any of the preceding claims,
wherein the wavelength range of the light transmitter (12) shifts with temperature by at most 0.1 nm/K or by at most 0.05 nm/K.

9. The sensor (10) according to any of the preceding claims,
wherein the receiving optics (24) comprise a first focusing optical element (26), in particular with a downstream aperture (28).

10. The sensor (10) according to any of the preceding claims,
wherein the receiving optics (24) comprise a second focusing optical element (30), in particular a spherical converging lens.

11. The sensor (10) according to claim 10,
wherein the adjusting device (36) is configured to tilt the optical filter (32) and the second focusing optical element (30), in particular with pivot in the second focusing optical element (30).

12. The sensor (10) according to claim 9 and 10 or 11,
wherein the receiving optics (24) comprise, in this order, the first focusing optical element (26), the aperture (28), the second focusing optical element (30) and the optical filter (32).

13. The sensor (10) according to any of the preceding claims,
wherein the control and evaluation unit (38) is configured to determine a distance of the object (20) from a light time of flight between transmitting the transmitted light (16) and receiving the remitted transmitted light (22).

14. The sensor (10) according to any of the preceding claims,
that is configured as a laser scanner and comprises a movable deflection unit (40) for periodically deflecting the transmitted light (16) in the monitoring area (18).

15. A method for detecting an object (20) in a monitoring area (18), wherein transmitted light (16) of a wavelength range is transmitted, is received again through receiving optics (24) after remission at the object (20) as remitted transmitted light (22) and is converted into a received signal in order to generate object information from the received signal, the receiving optics (24) suppressing extraneous light with an optical filter (32) tuned to the wavelength range, **characterized in that** the angle of incidence of the remitted transmitted light (22) on the optical filter (32) is adjusted to match a passband of the optical filter (32) to the wavelength range.

## Revendications

1. Capteur optoélectronique (10) pour la détection d'un objet (20) dans une zone de surveillance (18), avec un émetteur de lumière (12) pour l'émission de lumière d'émission (16) d'une plage de longueur d'onde, un récepteur de lumière (34) pour la génération d'un signal de réception à partir de la lumière d'émission (22) réémise sur l'objet (20), une optique de réception (24) disposée devant le récepteur de lumière (34) comprenant un filtre optique (32) adapté à la plage de longueurs d'onde pour supprimer la lumière étrangère, et une unité de commande et d'évaluation (38) configurée pour générer des informations sur l'objet à partir du signal reçu,
**caractérisé en ce que** le capteur (10) comprend un dispositif de réglage (36) pour modifier l'angle d'incidence de la lumière d'émission réémise (22) sur le filtre optique (32) afin d'adapter une bande passante du filtre optique (32) à la plage de longueurs d'onde.

2. Capteur (10) selon la revendication 1,
dans lequel le moyen de réglage (36) est configuré pour incliner le filtre optique (32).

3. Capteur (10) selon la revendication 1 ou 2,
dans lequel le filtre optique (32) est un filtre passe-bande.

4. Capteur (10) selon l'une des revendications précédentes,
dans lequel la plage de longueur d'onde se déplace dans une plage de longueur d'onde de tolérance en raison de dérives dans le fonctionnement du capteur (10) et/ou de caractéristiques de l'émetteur de lumière (12), et dans lequel le filtre optique (32) a une bande passante plus étroite que la plage de longueur d'onde de tolérance.

5. Capteur (10) selon l'une des revendications précédentes,
dans lequel le filtre optique (32) présente une bande passante dont la demilargeur est d'au plus 20 nm ou d'au plus 10 nm.

6. Capteur (10) selon l'une des revendications précédentes,
dans lequel le filtre optique (32) est plan.

7. Capteur (10) selon l'une des revendications précédentes,
dans lequel le filtre optique (32) a une surface d'au plus 20 mm ²ou d'au plus 10 mm².

8. Capteur (10) selon l'une des revendications précédentes,
dans lequel la gamme de longueurs d'onde de l'émetteur de lumière (12) se déplace avec la température d'au plus 0,1 nm/K ou d'au plus 0,05 nm/K.

9. Capteur (10) selon l'une des revendications précédentes,
dans lequel l'optique de réception (24) comprend un premier élément optique de focalisation (26), notamment avec une ouverture aval (28).

10. Capteur (10) selon l'une des revendications précédentes,
dans lequel l'optique de réception (24) comprend un deuxième élément optique de focalisation (30), notamment une lentille sphérique convergente.

11. Capteur (10) selon la revendication 10,
dans lequel le dispositif de réglage (36) est configuré pour faire basculer le filtre optique (32) et le deuxième élément optique de focalisation (30), en particulier avec un pivot dans le deuxième élément optique de focalisation (30).

12. Capteur (10) selon la revendication 9 et 10 ou 11,
dans lequel l'optique de réception (24) comprend, dans cet ordre, le premier élément optique de focalisation (26), l'ouverture (28), le deuxième élément optique de focalisation (30) et le filtre optique (32).

13. Capteur (10) selon l'une des revendications précédentes,
dans lequel l'unité de commande et d'évaluation (38) est configurée pour déterminer une distance de l'objet (20) à partir d'un temps de vol de la lumière entre l'émission de lumière d'émission (16) et la réception de la lumière d'émission réémise (22).

14. Capteur (10) selon l'une des revendications précédentes,
qui est configuré comme un scanner laser et comprend une unité de déviation mobile (40) pour dévier périodiquement la lumière d'émission (16) dans la zone de surveillance (18).

15. Procédé de détection d'un objet (20) dans une zone de surveillance (18), dans lequel de la lumière d'émission (16) d'une plage de longueurs d'onde est émise, est reçue à nouveau par une optique de réception (24) après rémission sur l'objet (20) en tant que lumière d'émission réémise (22) et est convertie en un signal de réception afin de générer une information d'objet à partir du signal de réception, l'optique de réception (24) supprimant la lumière étrangère avec un filtre optique (32) accordé sur la plage de longueurs d'onde,
**caractérisé en ce que** l'angle d'incidence de la lumière d'émission réémise (22) sur le filtre optique (32) est ajusté pour faire correspondre une bande passante du filtre optique (32) à la gamme de longueurs d'onde.
